# FASCICULE DE BREVET EUROPEEN

(11) **EP 0 407 273 B1**
(45) Date de publication et mention de la délivrance du brevet: **02.11.1994**
(21) Numéro de dépôt: 90401868.6
(22) Date de dépôt: 28.06.1990
(51) Int. Cl.: G06F 15/70, H04N 7/137

(54) **Dispositif de calcul d'une prédiction pour un traitement d'images**
Vorrichtung zur Bestimmung einer Prädiktion für Bildverarbeitung
Device for calculating a prediction for image processing

(30) Priorité: 07.07.1989 FR 8909172
(43) Date de publication de la demande: 09.01.1991
(73) Titulaire: THOMSON-CSF, 75008 Paris (FR)
(72) Inventeur: Aubie, Jean-Yves, F-92045 Paris la Défense (FR); Perron, Claude, F-92045 Paris la Défense (FR); Salmon, Philippe, F-92045 Paris la Défense (FR); Babonneau, Jean-Yves, F-92045 Paris la Défense (FR)
(74) Mandataire: Benoit, Monique

(56) Documents cités:
- US-A- 4 371 895
- US-A- 4 460 923
- IEEE TRANSACTIONS ON CIRCUITS AND SYSTEMS. vol. CAS33, no. 2, février 1986, NEWYORK US pages 250 - 259; M.FORTIER et al.: "Architectures for VLSIimplementation of movement-compensated video processors"
- Proceedings ICDSC-7 , 7th Int. Conf. on Digital Satellite Communications 12-16 mai 1986, Munich 1986, VDE Verlag, Berlin, RFA, pages 281-288; K. Kinuhata et al.: "Universal digital TV codec - UNICODEC"

## Description

La présente invention concerne un dispositif de calcul d'une prédiction pour un traitement d'images, consistant notamment a calculer la différence entre chaque valeur de luminance de l'image courante et une valeur, appelée prédiction, qui est calculée a partir de valeurs de luminance de l'image précédent l'image courante, en compensant le mouvement relatif de ces deux images.

Le fait de coder des valeurs de différence permet de tirer parti de la corrélation existant entre les images successives. Le fait de compenser le mouvement permet d'améliorer l'exactitude de la prédiction, pour réduire les valeurs de différence, et réduire ainsi la quantité d'informations résultant du codage.

Les images sont échantillonnées à un rythme régulier et chaque échantillon est représenté par une valeur qui est en général sa valeur de luminance. Le compensation de mouvement consiste à estimer un vecteur déplacement pour chaque échantillon de l'image précédente et à remplacer la valeur de luminance d'un premier échantillon par la valeur de luminance d'un second échantillon tel que le vecteur reliant le centre du premier échantillon au centre du second échantillon est égal au vecteur déplacement estimé pour le premier échantillon. La détermination de la valeur de luminance du second échantillon est simple dans le cas où le vecteur déplacement a des composantes égales chacune à un nombre entier d'unités, les unités correspondant aux dimensions d'un échantillon.

Généralement ce n'est pas le cas : l'extrémité du vecteur déplacement tombe en un point qui n'est pas exactement au centre d'un échantillon. Pour obtenir une compensation de mouvement et une prédiction aussi exactes que possible,il est classique de réaliser une interpolation entre les quatre valeurs de luminance représentant respectivement les quatre échantillons entourant l'extrémité du vecteur déplacement (voir par exemple IEEE Transactions On Circuits And Systems, vol. CAS 33, no.2, février 1986, New York, pages 250-259).

Les valeurs de luminance de l'image précédente sont généralement disponibles dans une mémoire d'image. Pour pouvoir lire les quatre valeurs de luminance nécessaires pour l'interpolation, il faut que cette mémoire d'image soit à accès aléatoire et il faut que son temps d'accès soit suffisamment réduit pour permettre quatre lectures pendant la période correspondant à l'échantillonnage d'un échantilon. Le rythme d'échantillonnage des images étant élevé, une solution consiste à utiliser en parallèle quatre mémoires à accès aléatoire. Cette solution est coûteuse, car se sont des mémoires de grosse capacité. Pendant chaque période d'échantillonnage, il est nécessaire aussi d'écrire la valeur de luminance d'un échantillon dans chaque mémoire. La gestion des adresses de lecture et des adresses d'écriture est donc assez complexe.

La compensation de mouvement concerne des vecteurs déplacement ayant une amplitude limitée à des valeurs relativement faibles et connues. Pour un échantillon donné, dans l'image précédente, il n'est donc pas nécessaire d'accéder aux valeurs représentatives de l'ensemble des échantillons de cette image précédente. Il suffit de pouvoir accéder aux valeurs représentatives des échantillons situés à l'intérieur d'une fenêtre centrée sur l'échantillon donné, et ayant une largeur et une longueur respectivement égales à deux fois l'amplitude verticale maximale et deux fois l'amplitude horizontale maximale des composantes du vecteur déplacement.

Il est donc envisageable d'utiliser des lignes à retard possédant un nombre de sorties limité, égal au nombre d'échantillons de la fenêtre, et d 'utiliser des multiplexeurs pour sélectionner quatre valeurs parmi celles fournies par les sorties de ces lignes à retard. Si la fenêtre englobe, par exemple, 8 x 4 échantillons, il suffit que les lignes à retard comportent 32 sorties ; et il suffit d'utiliser quatre dispositifs de multiplexage pour obtenir simultanément quatre valeurs sélectionnées parmi 32. Chaque dispositif de multiplexage permet de sélectionner une valeur parmi 32, indépendamment de la valeur sélectionnée par chacun des trois autres dispositifs de multiplexage.

Cette solution a pour inconvénient de nécessiter l'utilisation de 4 dispositifs de multiplexage ayant chacun 32 entrées et une sortie, dans cet exemple. Ces dispositifs de multiplexage sont donc relativement complexes, surtout si le nombre d'échantillons dans la fenêtre est élevé.

Le but de l'invention est de proposer un dispositif plus simple pour accéder aux 4 valeurs nécessaires pour calculer une prédiction. L'objet de l'invention est un dispositif qui tire parti de la relation particulière existant entre les 4 valeurs auxquelles il est nécessaire d'accéder : Les 4 échantillons correspondants sont connexes.

L'ensemble des échantillons de la fenêtre peut être décomposé en quatre sous-ensembles disjoints :
- l'un contient tous les échantillons qui ont un rang pair sur une ligne impaire de la fenêtre ;
- l'un contient tous les échantillons ayant un rang impair sur une ligne impaire dans la fenêtre ;
- l'un contient tous les échantillons ayant un rang pair sur une ligne paire dans la fenêtre ;
- l'un contient tous les échantillons ayant un rang impair sur une ligne paire.

Les quatre échantillons considérés pour un calcul de prédiction ont la propriété d'appartenir respectivement à chacun de ces sous-ensemble. Cette propriété permet de réaliser un dispositif de calcul très simplifié.

Selon l'invention, un dispositif de calcul d'une prédiction pour un traitement d'images, chaque image étant échantillonnée, chaque échantillon étant représenté par une valeur numérique, et chaque prédiction étant calculée par une interpolation entre les valeurs représentant 4 échantillons connexes donnés qui sont situés dans une fenêtre de dimensions fixées, est caractérisé en ce qu'il comporte :
- des premiers moyens pour stocker et décaler les valeurs des échantillons ayant un rang impair sur une ligne paire de la fenêtre ;
- des premiers moyens de multiplexage pour sélectionner l'une des valeurs stockées par les premiers moyens pour stocker ;
- des deuxièmes moyens pour stocker et décaler les valeurs des échantillons ayant un rang impair sur une ligne impaire dans la fenêtre ;
- des deuxièmes moyens de multiplexage, pour sélectionner l'une des valeurs stockées par les deuxièmes moyens pour stocker ;
- des troisièmes moyens pour stocker et décaler les valeurs des échantillons ayant un rang pair sur une ligne paire dans la fenêtre ;
- des troisièmes moyens de multiplexage, pour sélectionner l'une des valeurs stockées par les troisièmes moyens pour stocker ;
- des quatrièmes moyens pour stocker et décaler les valeurs des échantillons ayant un rang pair sur une ligne impaire dans la fenêtre ;
- des quatrièmes moyens de multiplexage pour sélectionner l'une des valeurs stockées par les quatrièmes moyens pour stocker ;
- des moyens de calcul ayant quatre entrées reliées respectivement à quatre sorties des premiers, deuxièmes, troisièmes et quatrièmes moyens de multiplexage, pour calculer une prédiction qui est une valeur interpolée entre quatre valeurs fournies respectivement par ces quatre sorties.

L'invention sera mieux comprise et d'autres détails apparaîtront à l'aide de la description ci-dessous et des figures l'accompagnant :
- la figure 1 illustre le procédé de compensation de mouvement par détermination d'une prédiction interpolée entre 4 valeurs ;
- la figure 2 représente le schéma synoptique d'un exemple de réalisation d'un dispositif de calcul d'une prédiction, comportant des lignes à retard ;
- la figure 3 illustre la propriété des échantillons considérés pour déterminer une prédiction, propriété qui est utilisée dans le dispositif selon l'invention ;
- la figure 4 représente un exemple de fenêtre comportant 8 x 4 échantillons ;
- la figure 5 représente le schéma synoptique d'un exemple de réalisation du dispositif selon l'invention, pour calculer une prédiction dans le cas d'une fenêtre telle que celle représentée sur la figure 4.

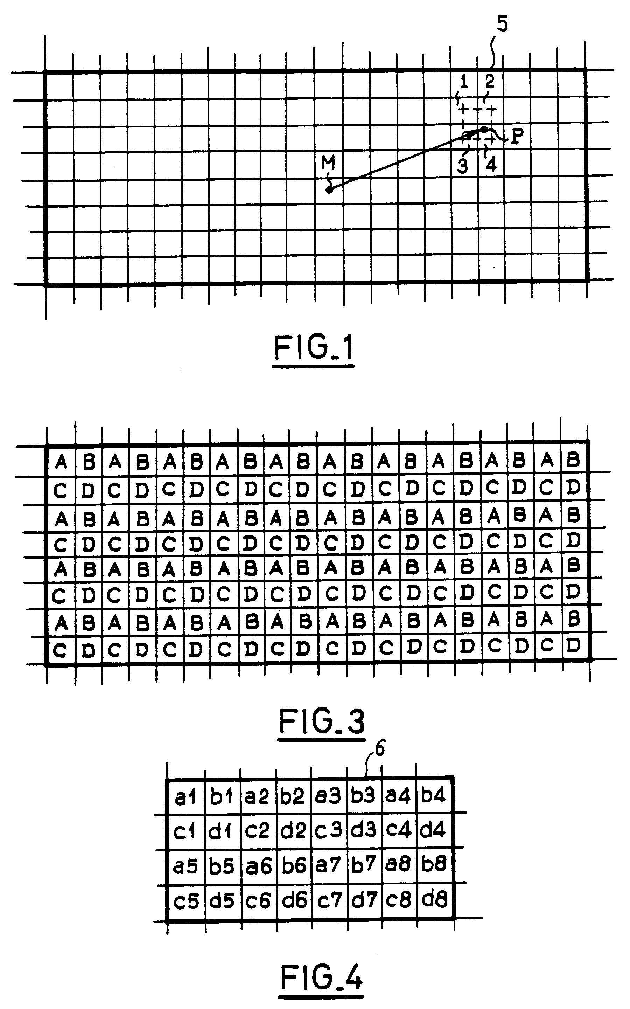

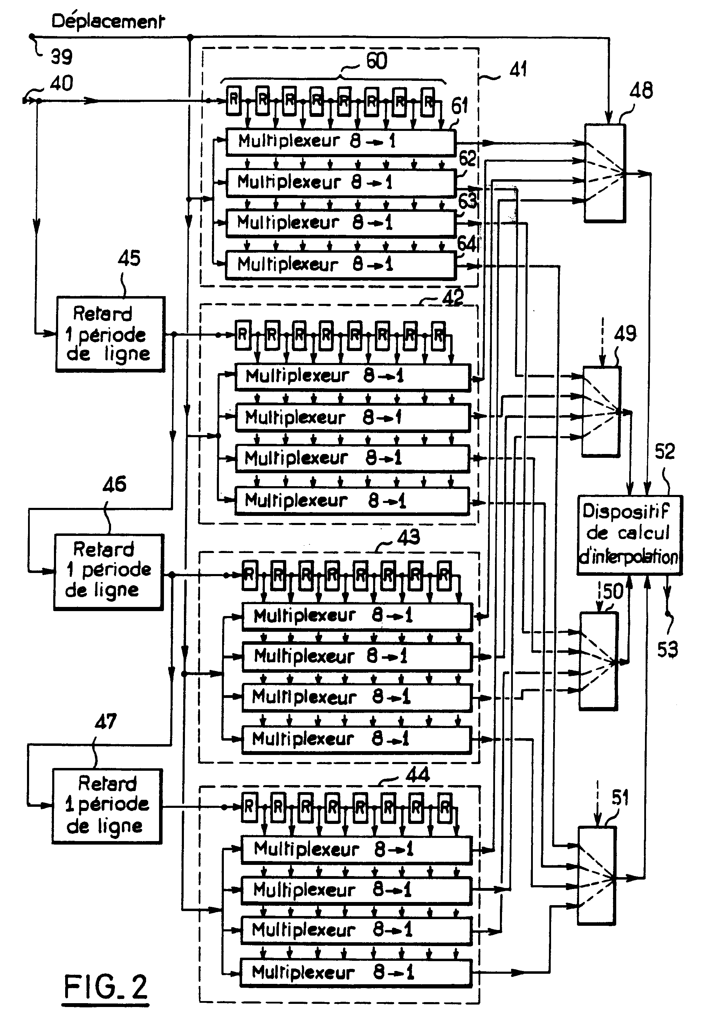

La figure 1 illustre l'opération de compensation de mouvement pour un échantillon centré sur un point M et dont l'estimation de mouvement est un vecteur MP. La compensation de ce mouvement consiste à déterminer une valeur de luminance pour un échantillon fictif centré sur le point P. L'échantillon considéré est fictif parce que ce point P ne correspond pas exactement au centre d'un échantillon. Le valeur de prédiction est calculée en interpolant entre les valeurs de luminance de 4 échantillons : 1, 2, 3, 4, tels que le point P est contenu dans la figure délimitée par les 4 centres de ces échantillons. Dans cet exemple, les échantillons sont carrés et cette figure est un carré qui est représenté en pointillé.

Dans cet exemple, l'amplitude des composantes du vecteur déplacement est limitée à 4 échantillons vers le haut de la figure ; trois échantillons vers le bas de la figure ; et onze échantillons vers la droite et vers la gauche de la figure. Ces amplitudes maximales délimitent une fenêtre 5 dans laquelle seront toujours situés les quatre échantillons considérés pour la compensation de mouvement. Ces amplitudes maximales sont déterminées en fonction du type d'image et du type d'objet représenté par les images.

Pour simplifier les exemples de réalisation décrits ci-dessous, nous considérerons une fenêtre de 8 x 4 échantillons seulement.

La figure 2 représente le schéma synoptique d'un exemple de réalisation d'un dispositif de calcul d'une prédiction, comportant des lignes à retard et 4 dispositifs de multiplexage permettant de sélectionner indépendamment 4 valeurs parmi 32. Cette description permettra d'apprécier la simplification réalisée dans le dispositif selon l'invention, pour une fenêtre de mêmes dimensions. L'exemple de réalisation représenté sur la figure 2 comporte : une borne d'entrée 40 recevant la suite des valeurs de luminance des échantillons d'une suite d'images ; trois lignes à retard 45,46,47 procurant chacune un retard égal à une période de ligne d'échantillons d'image ; quatre sous-ensemble 41 à 44 ; quatre multiplexeurs à quatre entrées et une sortie, 48 à 51 ; un dispositif 52 de calcul d'interpolation ; et une borne de sortie 53 fournissant une valeur interpolée pour chaque échantillon courant.

Cet exemple de réalisation comporte en outre une borne d'entrée 39 recevant une suite de mots binaires, en synchronisme avec l'échantillonnage, chaque mot binaire représentant un vecteur déplacement. Certains bits de ce mot binaire sont appliqués à des entrées de commande des multiplexeurs 48 à 51, et d'autres bits sont appliqués à des entrées de commande des sous-ensembles 41 à 44.

Les quatre sous-ensembles 41 à 44 sont identiques. Ils comportent chacun un ensemble 60 de 8 registres reliés en série, et quatre multiplexeurs à 8 entrées et une sortie, 61 à 64. L'ensemble 60 a une entrée série qui constitue une entrée de données du sous-ensemble, et huit sorties parallèles reliées respectivement à huit entrées des multiplexeurs 61 à 64. Les quatre sorties des multiplexeurs 61 à 64 constituent respectivement une première, une deuxième, une troisième, et une quatrième sortie du sous-ensemble 41. L'entrée de commande du sous-ensemble 41 est reliée à des entrées de commande des multiplexeurs 61 à 64.

Les valeurs reçues par la borne d'entrée 40 sont appliquées à l'entrée de données du sous-ensemble 41 et à une entrée du dispositif à retard 45. La sortie du dispositif 45 est reliée à l'entrée de données du sous-ensemble 42 et à une entrée du dispositif à retard 46. Une sortie du dispositif 46 est reliée à l'entrée de données du sous-ensemble 43 et à une entrée du dispositif à retard 47. Une sortie de ce dernier est reliée à l'entrée de données du sous-ensemble 44. Ainsi les huit valeurs des échantillons de la dernière ligne de la fenêtre entourant l'échantillon courant sont stockées dans l'ensemble de registres 60 du sous-ensemble 41. Au même instant, les registres du sous-ensemble 42 stockent les valeurs des huit échantillons situés sur la première ligne précédente. Les registres du sous-ensemble 43 stockent les valeurs des huit échantillons de la deuxième ligne précédente. Les registres du sous-ensembles 44 stockent les valeurs des huit échantillons de la troisième ligne précédente.

Le multiplexeur 61 du sous-ensemble 41 permet de sélectionner la valeur d'un échantillon parmi les huit de la dernière ligne de la fenêtre. Les multiplexeurs homologues du multiplexeur 61, dans les sous-ensembles 42 à 44 permettent de sélectionner la valeur d'un échantillon parmi les huit échantillons de la première ligne précédente, de la deuxième ligne précédente, et de la troisième ligne précédente, respectivement. Ces quatre multiplexeurs ont leurs sorties qui constituent les premières sorties des sous-ensembles 41 à 44 et qui reliées respectivement à des premières entrées des multiplexeurs 48, 49, 50, 51. Le multiplexeur 48 permet de sélectionner une première valeur parmi les quatre valeurs qui seront utilisées pour l'interpolation. Sa sortie est reliée à une entrée du dispositif de calcul 52. Les dispositifs de multiplexage 49 à 51 permettent de sélectionner respectivement une deuxième, une troisième, et une quatrième valeur et de les fournir au dispositif de calcul 52.

Il apparaît donc que l'utilisation de multiplexeurs pour sélectionner indépendamment quatre valeurs parmi trente-deux, nécessite, dans cet exemple, seize multiplexeurs à huit entrées et une sortie, et quatre multiplexeurs à quatre entrées et une sortie.

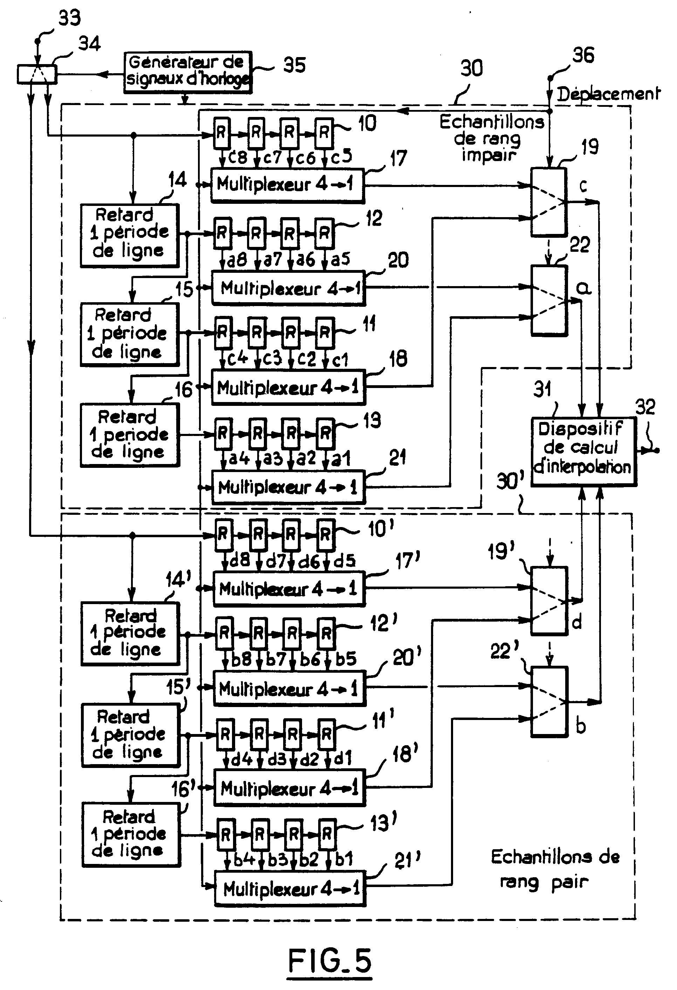

La figure 3 illustre la propriété des échantillons de la fenêtre 5 où sont situés tous les échantillons susceptibles d'être considérés pour la compensation du mouvement d'un échantillon situé au point M sur la figure 1. Quelle que soit l'amplitude du déplacement MP, le point P est situé à l'intérieur de la fenêtre 5, par définition même de cette fenêtre. D'autre part, le point P est entouré de quatre échantillons qui sont systématiquement connexes les uns aux autres. Il est possible de répartir l'ensemble des échantillons de la figure 5 en quatre sous-ensembles disjoints : les échantillons marqués A sur la figure 3, qui ont un rang impair sur une ligne impaire de la fenêtre 5 ; les échantillons marqués B sur la figure 3, qui ont un rang pair sur une ligne impaire de la fenêtre 5 ; les échantillons marqués C sur la figure 3, qui ont un rang impair sur une ligne paire ; et les échantillons marqués D sur la figure 3, qui ont un rang pair sur une ligne paire de la fenêtre 5.

Il apparaît que tout point P situé à l'intérieur de la fenêtre 5 est entouré de quatre échantillons appartenant respectivement aux sous-ensembles A, B, C, D, avec l'une des configurations suivantes :

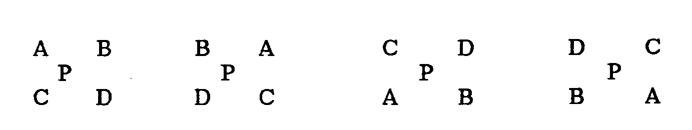

Par conséquent, il suffit de pouvoir accéder à la valeur d'un seul échantillon du sous-ensemble A, à la valeur d'un seul échantillon du sous-ensemble B, à la valeur d'un seul échantillon du sous-ensemble C, et à la valeur d'un seul échantillon du sous-ensemble D, pour pouvoir calculer une prédiction. Chacun de ces sous-ensembles comporte quatre fois moins d'échantillons que l'ensemble de la fenêtre 5, d'où il découle une simplification des moyens de multiplexage.

La figure 4 représente un exemple de fenêtre, 6, comportant 8x4 échantillons, dont les valeurs de luminance sont inscrites sur cette figure 4 pour illustrer le fonctionnement d'un exemple de réalisation du dispositif selon l'invention, dont le schéma synoptique est représenté sur la figure 5. Les valeurs des échantillons des sous-ensembles A, B, C, D, sont notées respectivement a, b, c, d, avec un indice.

L'exemple de réalisation représenté sur la figure 5 comporte : une borne d'entrée 33 recevant les valeurs des échantillons d'une suite d'images ; une borne d'entrée 36 recevant une suite de mots binaires représentant chacun un déplacement ; un démultiplexeur à une entrée et deux sorties, 34 ; un générateur 35 de signaux d'horloge ; deux sous-ensembles 30 et 30′ ; un dispositif 31 de calcul d'interpolation et une borne de sortie 32 fournissant une suite de valeurs interpolées qui constituent des prédictions.

La borne d'entrée 33 est reliée à l'entrée du démultiplexeur 34 qui a pour fonction de séparer les valeurs des échantillons ayant un rang pair et les valeurs des échantillons ayant un rang impair. Ces valeurs sont appliqués respectivement à une entrée de données du sous-ensemble 30′ et à une entrée de données du sous-ensemble 30. Le démultiplexeur 34 est commandé par un signal d'horloge, ayant une fréquence moitié de la fréquence d'échantillonnage, fourni par une sortie du générateur 35. Le générateur 35 commande, avec cette même fréquence, les éléments des sous-ensembles 30 et 30′ par des liaisons non représentées.

Les sous-ensembles 30 et 30′ ont la même structure. Les éléments du sous-ensemble 30′ sont désignés par les mêmes références numériques que les éléments homologues dans le sous-ensemble 30, avec la notation supplémentaire ′. Le sous-ensemble 30 comporte : trois dispositifs à retard, 14 à 16, procurant chacun un retard égal à une période de ligne d'échantillons d'image ; quatre ensembles de registres, 10 à 13, comportant chacun quatre registres en série, ayant une entrée série et quatre sorties en parallèle ; quatre multiplexeurs, 17 à 20, ayant quatre entrées et une sortie ; et deux multiplexeurs 19 et 22, ayant deux entrées et une sortie. Les multiplexeurs 17 à 22 possèdent des entrées de commande reliées à la borne d'entrée 36.

L'entrée de données du sous-ensemble 30 est reliée à une entrée du dispositif à retard 14 et à l'entrée série de l'ensemble de registres 10. l'a sortie du dispositif à retard 14 est reliée à l'entrée série de l'ensemble de registres 12, et à une entrée du dispositif à retard 15. Une sortie du dispositif 15 est reliée à l'entrée série de l'ensemble de registres 11, et à une entrée du dispositif à retard 16. Une sortie de ce dernier est reliée à l'entrée série de l'ensemble de registres 13.

Les quatre sorties parallèles de l'ensemble de registres 13 sont reliées respectivement aux quatre entrées du multiplexeur 17. A l'instant considéré, elles fournissent respectivement les valeurs a1, a2, a3, a4 des quatre échantillons de rang impair situés sur la première ligne de la fenêtre 6. Les quatre sorties parallèles de l'ensemble de registres 11 fournissent les quatre valeurs c1, c2, c3, et c4, des quatre échantillons de rang impair sur la deuxième ligne de la fenêtre 6. Les sorties parallèles de l'ensemble de registres 12 fournissent respectivement les valeurs a5, a6, a7, a8, des quatre échantillons de rang impair situés sur la troisième ligne de la fenêtre. Les sorties parallèles de l'ensemble de registres 10 fournissent les valeurs c5, c6, c7, c8, des quatre échantillons de rang impair situés sur la quatrième ligne de la fenêtre 6.

La sortie du multiplexeur 17 est reliée à une première entrée du multiplexeur 19. l'a sortie du multiplexeur 18 est reliée à une seconde entrée du multiplexeur 19. La sortie du multiplexeur 20 est reliée à une première entrée du multiplexeur 22. La sortie du multiplexeur 21 est reliée à une seconde entrée du multiplexeur 22. Les sorties du multiplexeur 19 et 22 constituent respectivement deux sorties du sous-ensemble 30 reliées respectivement à deux entrées du dispositif de calcul 31. De même deux sorties homologues du sous-ensemble 30′ sont reliées à deux autres entrées du dispositif 31.

Les multiplexeurs 17 à 22 possèdent des entrées de commande reliées à la borne d'entrée 36 pour recevoir le mot binaire représentant le déplacement pour l'échantillon courant à l'instant considéré. Ce mot binaire commande ces multiplexeurs pour sélectionner les valeurs à utiliser pour l'interpolation. Les multiplexeurs 17, 18, 19 sélectionnent une valeur c. Les multiplexeurs 20, 21, 22 sélectionnent une valeur a.

De manière analogue, les deux sorties du sous-ensemble 30′ fournissent respectivement une valeur b et une valeur d au dispositif de calcul 31. Le dispositif 31 est un dispositif classique de calcul d'interpolation, appliquant par exemple un algorithme d'interpolation bi-linéaire et fournissant une valeur interpolée à la borne de sortie 32.

Les dispositifs à retard 14 à 16, ainsi que leurs homologues 14′ à 16′, sont classiques. Ils peuvent être constitués chacun de registres à décalage commandés par un signal d'horloge, à une fréquence égale à la moitié de la fréquence d'échantillonnage.

Une comparaison de l'exemple de réalisation du dispositif selon l'invention, représenté sur la figure 5 et de l'exemple de réalisation selon la solution représentée sur la figure 2, met en évidence la simplification de réalisation, puisque les seize multiplexeurs à huit entrées, 61 à 64, sont remplacés par huit multiplexeurs à quatre entrées, 17 à 21 et 17′ à 21′, et puisque les quatre multiplexeurs à quatre entrées, 48 à 51, sont remplacés par quatre multiplexeurs à deux entrées, 19, 22, 19′, 22′. Chaque entrée de ces multiplexeurs reçoit en parallèle un nombre de bits relativement élevé qui est nécessaire pour traduire une valeur de luminance. La réduction du nombre d'entrées et du nombre de multiplexeurs réduit donc la complexité du dispositif de multiplexage dans des proportions encore plus élevées que celles qui apparaissent sur la figure où chaque entrée n'est représentée que par un trait.

L'invention ne se limite pas à l'exemple de réalisation décrit ci-dessus. Dans le cas plus général où la fenêtre comporte L lignes de E échantillons, où L et E sont deux nombres pairs, le sous-ensemble 30 comporte :
- L-2 dispositifs à retard, 14, 15 ; L/2 séries, 10, 11, de E/2 registres, pour stocker et décaler les valeurs des échantillons ayant un rang impair sur une ligne paire ; L/2 multiplexeurs, 17, 18, à E/2 entrées et une sortie, et un multiplexeur 19 à L/2 entrées et une sortie, pour sélectionner l'un des échantillons c ayant un rang impair sur une ligne paire ;
- L-1 dispositifs à retard, 14 à 16 ; L/2 séries, 12, 13, de E/2 registres, pour stocker et décaler les valeurs des échantillons ayant un rang impair sur une ligne impaire ; L/2 multiplexeurs, 20, 21, à E/2 entrées et une sortie, et un multiplexeur 22 à L/2 entrées et une sortie, pour sélectionner l'un des échantillons a ayant un rang impair sur une ligne impaire.

Le sous-ensemble 30′ comporte des éléments analogues.

De nombreuses variantes de réalisation sont à la portée de l'homme de l'Art. Il est possible, par exemple, d'incorporer l'ensemble de registres 12 dans le dispositif à retard 14, l'ensemble de registres 11 dans le dispositif à retard 15, l'ensemble de registres 13 dans le dispositif à retard 16.

## Revendications

1. Dispositif de calcul d'une prédiction pour un traitement d'images, chaque image étant échantillonnée, chaque échantillon étant représenté par une valeur numérique, et chaque prédiction étant calculée par une interpolation entre les valeurs représentant 4 échantillons connexes donnés (1 à 4), qui sont situés dans une fenêtre (5; 6) de dimensions fixées ;
caractérisé en ce qu'il comporte :
- des premiers moyens (10, 11, 14, 15) pour stocker et décaler les valeurs des échantillons (C) ayant un rang impair sur une ligne paire de la fenêtre (5; 6) ;
- des premiers moyens de multiplexage (17 à 19) pour sélectionner l'une des valeurs (c) stockées par les premiers moyens pour stocker ;
- des deuxièmes moyens (12 à 16) pour stocker et décaler les valeurs des échantillons (A) ayant un rang impair sur une ligne impaire dans la fenêtre (5; 6) ;
- des deuxièmes moyens (20 à 22) de multiplexage, pour sélectionner l'une (a) des valeurs stockées par les deuxièmes moyens pour stocker ;
- des troisièmes moyens (10′, 11′, 14′, 15′) pour stocker et décaler les valeurs des échantillons (D) ayant un rang pair sur une ligne paire dans la fenêtre (5; 6) ;
- des troisièmes moyens de multiplexage (17′ à 19′), pour sélectionner l'une (d) des valeurs stockées par les troisièmes moyens pour stocker ;
- des quatrièmes moyens (12′ à 16′) pour stocker et décaler les valeurs des échantillons (B) ayant un rang pair sur une ligne impaire dans la fenêtre (5; 6) ;
- des quatrièmes moyens (20′ à 22′) de multiplexage pour sélectionner l'une (b) des valeurs stockées par les quatrièmes moyens pour stocker ;
- des moyens de calcul (31) ayant quatre entrées reliées respectivement à quatre sorties des premiers, deuxièmes, troisièmes et quatrièmes moyens de multiplexage (17 à 22, 17′ à 22′), pour calculer une prédiction qui est une valeur interpolée entre quatre valeurs fournies respectivement par ces quatre sorties.

2. Dispositif selon la revendication 1, pour calculer la prédiction à partir des valeurs représentant quatre échantillons situés dans une fenêtre (5) comportant L lignes de E échantillons, L et E étant deux nombres pairs, caractérisé en ce que :
- les premiers moyens et les troisièmes moyens pour stocker et décaler, comportent (L- 2) dispositifs à retard (14, 15, 14′, 15′), chacun procurant un retard égal à une période de ligne d'échantillons d'image ; et comportent individuellement L/2 séries (10, 11, 10′, 11′) de E/2 registres ;
- les deuxièmes moyens et les quatrièmes moyens pour stocker et décaler, comportent (L-1) dispositifs à retard (14 à 16, 14′ à 16′) chacun procurant un retard égal à une période de ligne d'échantillons d'image ; et comportent individuellement L/2 séries (12, 13, 12′, 13′) de E/2 registres ;
- les premiers, deuxièmes, troisièmes, et quatrièmes moyens de multiplexage comportent individuellement L/2 multiplexeurs (17, 18) à E/2 entrées et une sortie ; et un multiplexeur (19) à L/2 entrées et une sortie.

## Patentansprüche

1. Voraussage-Rechenvorrichtung für eine Bildverarbeitung, wobei jedes Bild getastet ist und jede Tastprobe durch einen digitalen Wert dargestellt ist und wobei jede Vorhersage durch eine Interpolation zwischen den vier gegebenen benachbarten Tastproben (1 bis 4) entsprechenden Werten berechnet wird, die in einem Fenster (5; 6) fester Abmessungen liegen, dadurch gekennzeichnet, daß die Vorrichtung aufweist:
- erste Mittel (10, 11, 14, 15) zur Speicherung und Verschiebung der Werte der Tastproben (C) mit ungeradzahligem Rang in einer geradzahligen Zeile des Fensters (5; 6),
- erste Multiplexiermittel (17 bis 19) zur Auswahl eines der in den ersten Speichermitteln gespeicherten Werts (c),
- zweite Mittel (12 bis 16) zur Speicherung und Verschiebung der Werte der Tastproben (A) mit ungeradzahligem Rang in einer ungeradzahligen Zeile des Fensters (5: 6),
- zweite Multiplexiermittel (20 bis 22) zur Auswahl eines der in den zweiten Speichermitteln gespeicherten Werts (a),
- dritte Mittel (10′, 11′, 14′, 15′) zur Speicherung und Verschiebung der Werte der Tastproben (D) mit geradzahligem Rang in einer geradzahligen Zeile des Fensters (5; 6),
- dritte Multiplexiermittel (17′ bis 19′) zur Auswahl eines der in den dritten Speichermitteln gespeicherten Werts (d),
- vierte Mittel (12′ bis 16′) zur Speicherung und Verschiebung der Werte der Tastproben (B) mit geradzahligem Rang in einer ungeradzahligen Zeile des Fensters (5; 6),
- vierte Multiplexiermittel (20′ bis 22′) zur Auswahl eines der in den vierten Speichermitteln gespeicherten Werts (b),
- Rechenmittel (31) mit vier Eingängen, die an je einen Ausgang der ersten, zweiten, dritten und vierten Multiplexiermittel (17 bis 22; 17′ bis 22′) angeschlossen sind, um eine Vorhersage zu berechnen, die einen interpolierten Wert zwischen vier von diesen vier Ausgängen gelieferten Werten darstellt.

2. Vorrichtung nach Anspruch 1 zur Vorhersageberechnung aufgrund der vier in einem Fenster (5) mit L Zeilen zu je E Tastproben liegenden Tastproben, wobei L und E geradzahlig sind, dadurch gekennzeichnet, daß
- die ersten Mittel und die dritten Mittel zur Speicherung und Verschiebung (L-2) Verzögerungsvorrichtungen (14, 15, 14′, 15′) aufweisen, die je eine Verzögerung gleich einer Zeilenperiode von Tastproben eines Bilds erzeugen und die je L/2 Serien (10, 11, 10′, 11′) von je E/2 Registern enthalten,
- die zweiten Mittel und die vierten Mittel zur Speicherung und Verschiebung (L-1) Verzögerungsvorrichtungen (14 bis 16, 14′ bis 16′) aufweisen, die je eine Verzögerung gleich einer Zeilenperiode von Tastproben eines Bilds erzeugen und die je L/2 Serien (12, 13, 12′, 13′) von je E/2 Registern enthalten,
- die ersten, zweiten, dritten und vierten Multiplexiermittel je L/2 Multiplexer (17, 18) mit je E/2 Eingängen und einem Ausgang sowie einen Multiplexer (19) mit L/2 Eingängen und einem Ausgang aufweisen.

## Claims

1. Device for calculating a prediction for image processing, each image being sampled, each sample being represented by a numerical value, and each prediction being calculated by interpolation between the values representing 4 given adjoining samples (1 to 4), which are situated in a window (5; 6) of fixed dimensions;
characterized in that it includes:
- first means (10, 11, 14, 15) for storing and shifting the values of the samples (C) having odd rank in an even line of the window (5; 6);
- first multiplexing means (17 to 19) for selecting one of the values (c) stored by the first means for storing;
- second means (12 to 16) for storing and shifting the values of the samples (A) having odd rank in an odd line in the window (5; 6);
- second multiplexing means (20 to 22) for selecting one (a) of the values stored by the second means for storing;
- third means (10′, 11′, 14′, 15′ ) for storing and shifting the values of the samples (D) having even rank in an even line in the window (5; 6);
- third multiplexing means (17′ to 19′) for selecting one (d) of the values stored by the third means for storing;
- fourth means (12′ to 16′) for storing and shifting the values of the samples (B) having even rank in an odd line in the window (5; 6);
- fourth multiplexing means (20′ to 22′) for selecting one (b) of the values stored by the fourth means for storing;
- calculating means (31) having four inputs connected respectively to four outputs of the first, second, third and fourth multiplexing means (17 to 22, 17′ to 22′), for calculating a prediction which is an interpolated value between four values provided by these four outputs respectively.

2. Device according to Claim 1, for calculating the prediction from the values representing four samples situated in a window (5) containing L lines of E samples, L and E being two even numbers, characterized in that:
- the first means and the third means for storing and shifting, include (L-2) delay devices (14, 15, 14′, 15′), each affording a delay equal to an image sample line period; and individually include L/2 series (10, 11, 10′, 11′ ) of E/2 registers;
- the second means and the fourth means for storing and shifting, include (L-1) delay devices (14 to 16; 14′ to 16′) each affording a delay equal to an image sample line period; and individually include L/2 series (12, 13, 12′, 13′ ) of E/2 registers;
- the first, second, third and fourth multiplexing means individually include L/2 multiplexers (17, 18) with E/2 inputs and one output; and a multiplexer (19) with L/2 inputs and one output.
